## Europäisches Patentamt
## European Patent Office
### Office européen des brevets

(19)

(11) Veröffentlichungsnummer: **0 313 115**
**B1**

(12) **EUROPÄISCHE PATENTSCHRIFT**

(45) Veröffentlichungstag der Patentschrift:
07.11.90

(51) Int. Cl.⁵: **B01D 53/34**

(21) Anmeldenummer: 88201764.3

(22) Anmeldetag: 18.08.88

(54) Verfahren zur Entfernung von NO aus Verbrennungsabgasen.

(30) Priorität: 17.10.87 DE 3735203

(43) Veröffentlichungstag der Anmeldung:
26.04.89 Patentblatt 89/17

(45) Bekanntmachung des Hinweises auf die Patenterteilung:
07.11.90 Patentblatt 90/45

(84) Benannte Vertragsstaaten:
AT DE ES GB IT

(56) Entgegenhaltungen:
FR-A- 2 377 835
FR-A- 2 484 277
GB-A- 1 488 087

(73) Patentinhaber: METALLGESELLSCHAFT AG,
Reuterweg 14 Postfach 3724, D-6000 Frankfurt/M.1(DE)

(72) Erfinder: Weber, Ekkehard, Prof., Dr., Amselweg 6,
D-4300 Essen 17(DE)
Erfinder: Hübner, Kurt, Dr., Essener Strasse 68 a,
D-4320 Hattingen 16(DE)

ACTORUM AG

## Beschreibung

Die Erfindung bezieht sich auf ein Verfahren zur Entfernung von NO aus sauerstoffhaltigen Verbrennungsabgasen, bei dem die Abgase in einer homogenen Gasphasenreaktion mit 0,5 bis 5 Mol $NH_3$ je Mol NO in Gegenwart eines sauerstoffhaltigen Kohlenwasserstoffs bei hoher Temperatur zur Reaktion gebracht werden, wobei als sauerstoffhaltiger Kohlenwasserstoff mindestens ein aliphatischer Alkohol zur Anwendung kommt.

Aus der DE-AS 2 411 672 ist ein Verfahren zum Entfernen von Stickstoffmonoxid aus sauerstoffhaltigen Verbrennungsabgasen durch selektive Reduktion bekannt, bei dem der Stickstoffmonoxid enthaltende Verbrennungsabgasstrom in einer homogenen Gasphasenreaktion mit 0,4 bis 10 Mol Ammoniak oder einer Ammoniakvorstufe (wäßrige Ammoniaklösung, Ammoniumkarbonat, Ammoniumformiat, Ammoniumoxalat oder wäßrige Lösungen dieser Ammoniumsalze) je Mol Stickstoffmonoxid in Gegenwart von Kohlenmonoxid, Wasserstoff oder eines paraffinischen, olefinischen, aromatischen, oxidierten und damit sauerstoffhaltigen oder sulfonierten Kohlenwasserstoffs bei 705 bis 1095°C in Kontakt gebracht wird, wobei die genannten Kohlenwasserstoffe sowie das Kohlenmonoxid und der Wasserstoff gegenüber dem Stickstoffmonoxid als Reduktionsmittel wirken. Bei diesem Verfahren wird als sauerstoffhaltiger Kohlenwasserstoff beispielsweise Methanol empfohlen. Bei dem aus der DE-AS 2 411 672 bekannten Verfahren ist es nachteilig, das zur Entfernung des NO relativ hohe Reaktionstemperaturen erforderlich sind.

Der Erfindung liegt daher die Aufgabe zugrunde, ein Verfahren der eingangs genannten Art zu schaffen, das zur Entstickung von Verbrennungsabgasen verwendet werden kann, die eine vergleichsweise niedrige Temperatur von 550 bis 700°C haben. Derartige Verbrennungsabgase entstehen insbesondere bei der Verbrennung minderwertiger Brennstoffe und/oder bei der Verbrennung in einer Wirbelschicht, wobei den Abgasen bereits unmittelbar nach ihrer Bildung ein Teil ihres Wärmeinhalts durch Kühlflächen entzogen worden ist.

Die der Erfindung zugrundeliegende Aufgabe wird dadurch gelöst, daß der aliphatische Alkohol sowie $NH_3$ mit dem Abgas bei 550 bis 680°C in Kontakt gebracht werden. Es hat sich nämlich in überraschender Weise gezeigt, daß die Entfernung des NO aus Verbrennungsabgasen durch den Einsatz aliphatischer Alkohole auch bei vergleichsweise niedrigen Reaktionstemperaturen mit hinreichender Entstickungsleistung erreicht werden kann. Diese Tatsache ermöglicht es, daß der NO-Gehalt von Verbrennungsabgasen, die bei einer Verbrennungstemperatur von 700 bis 1 000°C gebildet worden sind und/oder deren Temperatur durch Entzug von Wärme auf 550 bis 700°C gesunken ist, in einer homogenen Gasphasenreaktion signifikant vermindert werden kann.

Nach der Erfindung ist ferner vorgesehen, daß dem Abgas pro Mol $NH_3$ mit dem aliphatischen Alkohol 0,5 bis 10 Mol Kohlenstoff zugegeben werden.

Bei Einhaltung dieser Mengenverhältnisse wird erreicht, daß im entstickten Abgas nur sehr geringe $NH_3$-Mengen vorliegen, während der zugegebene aliphatische Alkohol quantitativ zu Kohlendioxid und Wasser oxidiert wird und das Abgas nicht mit Kohlenwasserstoff-Zerfallsprodukten verunreinigt.

Das erfindungsgemäße Verfahren kann besonders erfolgreich durchgeführt werden, wenn die aliphatischen Alkohole in Wasser löslich sind und wenn das $NH_3$ sowie der aliphatische Alkohol dem Abgas in Form einer wässrigen Lösung zugegeben werden. Durch diese Maßnahmen wird eine besonders einfache und betriebssichere Handhabung der zur Entfernung des NO benötigten Stoffe ermöglicht. Nach der Erfindung ist es besonders vorteilhaft, wenn als aliphatischer Alkohol tertiäres Butanol oder Glycerin verwendet wird, da beide Alkohole auch bei niedrigen No-Gehalten eine Entstickungsleistung von 50 bis 75 % gewährleisten.

Schließlich ist nach der Erfindung vorgesehen, daß die Reaktionszeit der homogenen Gasphasenreaktion 0,01 bis 5 s beträgt. Diese Reaktionszeit läßt es zu, daß das erfindungsgemäße Verfahren auch zur Entstickung großer Abgasvolumina eingesetzt werden kann, da die Rauchgasführungssysteme als Reaktoren wirken, was erhebliche wirtschaftliche Vorteile erbringt.

Der Gegenstand der Erfindung wird nachfolgend anhand von zwei Ausführungsbeispielen näher erläutert.

Verbrennungsabgase entstehen bei der Verbrennung fester, flüssiger und gasförmiger Brennstoffe und enthalten neben Stickstoff, Kohlendioxid, Wasser sowie Sauerstoff auch $SO_2$ und Stickoxide. Stickoxide, die zu ca. 90 % aus NO bestehen, wirken als Schadstoffe und müssen aus den Verbrennungabgasen entfernt werden, bevor die Abgase in die Atmosphäre gelangen. Da die Verbrennungsabgase 0,5 bis 10 Vol.% Sauerstoff sowie 100 bis 2 000 ppm NO enthalten und da beide Substanzen als Oxidationsmittel wirken, ist es schwierig, das NO selektiv durch geeignete Reduktionsmittel zu reduzieren. Im Hinblick auf diese Schwierigkeit wurde das erfindungsgemäße Verfahren zur Entstickung eines Abgases angewandt, das nur 120 ppm NO sowie 5 Vol.% $O_2$ enthielt und das durch Verbrennung von leichtem Heizöl unter Zugabe von NO erzeugt worden war.

Beispiel 1:

Das vorgenannte Verbrennungsabgas, welches eine Temperatur von 650°C aufwies, wurde mit einer wässrigen Lösung vermischt, die aus 11 Gew.% tertiärem Butanol und 89 Gew.% Wasser bestand und in der 0,5 Mol $NH_3$/l gelöst waren. Das mit der Lösung gemischte Abgas wurde während einer Reaktionszeit von 0,5 s bei 630 bis 640°C durch ein wärmeisoliertes Rauchgasführungssystem geführt. In der homogenen Gasphase betrug das Molverhältnis $NH_3 : NO = 2 : 1$ und $C : NH_3 = 8 : 1$. Nach Beendigung der homogenen Gasphasenreaktion enthielt das Abgas noch ca. 60 ppm NO, was einer Entstickungsleistung von 50 % entspricht, sowie ca. 5 ppm $NH_3$.

**Beispiel 2:**

Das vorgenannte Verbrennungsabgas, welches eine Temperatur von ca. 650°C aufwies, wurde mit einer Lösung gemischt, die aus 5 Gew.% Glycerin sowie 95 Gew.% Wasser bestand und in der 0,5 Mol $NH_3$ gelöst waren. Die Mischung wurde während 0,5 s bei einer Temperatur von 630 bis 640°C durch ein wärmeisoliertes Rauchgasführungssystem geführt. Während der homogenen Gasphasenreaktion betrug das Molverhältnis von $NH_3$ NO = 2 : 1 und von C : $NH_3$ = 3 : 1. Nach Verlassen des Rauchgasführungssystems enthielt das entstickte Abgas noch 30 ppm NO, was einer Entstickungsleistung von 75 % entspricht, sowie 5 ppm $NH_3$.

Die wässrigen Lösungen, die den aliphatischen Alkohol sowie $NH_3$ enthielten, wurden dem Abgasstrom durch Einstoffdüsen zudosiert, was zu einer gleichmäßigen Vermischung führte.

## Patentansprüche

1. Verfahren zur Entfernung von NO aus sauerstoffhaltigen Verbrennungsabgasen, bei dem die Abgase in einer homogenen Gasphasenreaktion mit 0,5 bis 5 Mol $NH_3$ je Mol NO in Gegenwart eines sauerstoffhaltigen Kohlenwasserstoffs bei hoher Temperatur zur Reaktion gebracht werden, wobei als sauerstoffhaltiger Kohlenwasserstoff mindestens ein aliphatischer Alkohol zur Anwendung kommt, dadurch gekennzeichnet, daß der aliphatische Alkohol sowie $NH_3$ mit dem Abgas bei 550 bis 680°C in Kontakt gebracht werden.

2. Verfahren nach Anspruch 1, dadurch gekennzeichnet, daß dem Abgas pro Mol $NH_3$ mit dem aliphatischen Alkohol 0,5 bis 10 Mol Kohlenstoff zugegeben werden.

3. Verfahren nach den Ansprüchen 1 bis 2, dadurch gekennzeichnet, daß die aliphatischen Alkohole in Wasser löslich sind.

4. Verfahren nach den Ansprüchen 1 bis 3, dadurch gekennzeichnet, daß als aliphatischer Alkohol tertiäres Butanol oder Glycerin verwendet wird.

5. Verfahren nach den Ansprüchen 1 bis 4, dadurch gekennzeichnet, daß das $NH_3$ und der aliphatische Alkohol dem Abgas in Form einer wässrigen Lösung zugegeben werden.

6. Verfahren nach den Ansprüchen 1 bis 5, dadurch gekennzeichnet, daß die Reaktionszeit der homogenen Gasphasenreaktion 0,01 bis 5 s beträgt.

## Claims

1. A process for the removal of NO from oxygen-containing combustion exhaust gases, in which the exhaust gases are reacted in a homogeneous gas phase reaction with 0.5 to 5 Mol $NH_3$ per Mol NO in the presence of an oxygen-containing hydrocarbon, at least one aliphatic alcohol being used as oxygen-containing hydrocarbon, characterized in that the aliphatic alcohol as well as $NH_3$ are contacted with the exhaust gas at 550 to 680°C.

2. Process according to claim 1, characterized in that 0.5 to 10 Mols carbon per Mol $NH_3$ are added to the exhaust gas with the aliphatic alcohol.

3. Process according to claims 1 to 2, characterized in that the aliphatic alcohols are soluble in water.

4. Process according to claims 1 to 3, characterized in that tertiary butanol or glycerol is used as the aliphatic alcohol.

5. Process according to claims 1 to 4, characterized in that the $NH_3$ and the aliphatic alcohol are added to the exhaust gas in the form of an aqueous solution.

6. Process according to claims 1 to 5, characterized in that the reaction time of the homogeneous gas phase reaction is 0.01 to 5s.

## Revendications

1. Procédé pour éliminer du NO dans des effluents gazeux de combustion oxygénés, qui consiste à mettre les effluents gazeux à réagir, dans une réaction homogène en phase gazeuse, sur 0,5 à 5 moles de $NH_3$ par mole de NO, en présence d'un hydrocarbure oxygéné et à une température élevée, en utilisant, comme hydrocarbure oxygéné, au moins un alcool aliphatique, caractérisé en ce qu'il consiste à mettre l'alcool aliphatique ainsi que $NH_3$ en contact avec l'effluent gazeux entre 550 et 680°C.

2. Procédé suivant la revendication 1, caractérisé en ce qu'il consiste à ajouter à l'effluent gazeux de 0,5 à 10 moles d'hydrocarbure par mole de $NH_3$ avec l'alcool aliphatique.

3. Procédé suivant la revendication 1 ou 2, caractérisé en ce que les alcools aliphatiques sont solubles dans l'eau.

4. Procédé suivant l'une des revendications 1 à 3, caractérisé en ce qu'il consiste à utiliser comme alcool aliphatique du butanol tertiaire ou de la glycérine.

5. Procédé suivant l'une des revendications 1 à 4, caractérisé en ce qu'il consiste à ajouter à l'effluent gazeux le $NH_3$ et l'alcool aliphatique sous la forme d'une solution aqueuse.

6. Procédé suivant l'une des revendications 1 à 5, caractérisé en ce que la durée de la réaction homogène en phase gazeuse est comprise entre 0,01 et 5 secondes.